# EUROPÄISCHE PATENTSCHRIFT

(11) **EP 2 104 793 B1**
(45) Veröffentlichungstag und Bekanntmachung des Hinweises auf die Patenterteilung: **02.03.2011**
(21) Anmeldenummer: 07855992.9
(22) Anmeldetag: 21.12.2007
(51) Int. Cl.: F16H 57/00, F16H 48/08

(54) **VORRICHTUNG ZUR DÄMPFUNG VON RESONANZVIBRATIONEN DER AUSGANGSWELLE VON AUSGLEICHGETRIEBE**
DEVICE FOR DAMPING RESONANCE VIBRATIONS OF THE OUTPUT SHAFT OF A DIFFERENTIAL GEARING
DISPOSITIF POUR AMORTIR LES VIBRATIONS DE RÉSONANCE DE L'ARBRE DE SORTIE D'UN ENGRENAGE COMPENSATEUR

(30) Priorität: 21.12.2006 CZ 20060819
(43) Veröffentlichungstag der Anmeldung: 30.09.2009
(73) Patentinhaber: Skoda Auto A.S., 293 60 Mladá Boleslav (CZ)
(72) Erfinder: VERNER, Jaroslav Ing., 294 21 Bela pod Bezdezem (CZ)
(86) Internationale Anmeldenummer: PCT/CZ2007/000117
(87) Internationale Veröffentlichungsnummer: WO 2008/074271

(56) Entgegenhaltungen:
- EP-A- 1 420 188
- DE-A1- 19 547 147
- DE-A1- 19 809 528
- DE-U1- 9 312 507

## Beschreibung

Die Erfindung bezieht sich auf die Lagerung der Ausgangswellen im Ausgleichgetriebegehäuse von Fahrzeugen.

Gegenwärtig wird die Anordnung von Fahrzeugtriebwerken verwendet, bei der der Motor direkt mit Getriebe, in dem das Ausgleichsgetriebe aufgenommen wird, verbunden ist. Dies dient zum Ausgleich unterschiedlicher Radumdrehungen, z. B. in Kurven. Das Antriebsmoment wird auf die Räder über Mitnehmer übertragen, auf denen Gelenkwellen angeschlossen werden. Zwischen dem Ausgleichgetriebegehäuse und den Mitnehmern gibt es funktionsmäßig ein notwendiges Radialspiel, welches die Ursache von Resonanzen bzw. Vibrationen der Mitnehmer, angeregt durch den Motor, darstellt. Vibrationen der Mitnehmer bzw. der Gelenkwellen sind Entstehungsursache einerseits von Geräuschen mit Rasselcharakter (bezeichnet als Schnarren), andererseits von Geräuschen mit Sauscharakter (bezeichnet als Wummern). Beide Geräuscharten reduzieren den Reisekomfort.

Aus der Gibrauchsmasterschrift DE 9312507 U1 ist eine Lösung bekannt, bei der die Ausgangswelle mit einer Nut versehen ist, in der eine Wellenhalbbogenfeder untergebracht ist, die einerseits auf den Nutboden, andererseits auf den Ausgleichgetriebegehäusekörper wirkt, wodurch es zur Vibrationssenkung und damit auch zur Reduktion nachfolgender Geräusche kommt. Nachteil der angeführten Lösung ist die Tatsache, dass Vibrationen in axialer Richtung nicht kompensiert werden, wodurch es zur Entstehung von Geräuschen mit Rasselcharakter kommt.

Aus der veröffentlichten Patentanmeldung DE 1957147 A1 ist die Lagerung einer Ausgangswelle bekannt, wobei zur Einschränkung der Vibrationsentstehung und dabei auch von Geräuschen mit Sauscharakter das gegebene Mitnehmerspiel durch einen Metallkegelring abgegrenzt ist, welcher durch eine Feder in axialer Richtung zwischen Ausgleichgetriebegehäuse und Mitnehmer gedrückt wird. Die oben genannte Gestaltung eliminiert jedoch keine Erscheinungsformen von Geräuschen mit Rasselcharakter.

Die DE 9 312 507 U1 sowie die DE 19 809 528 A1 offenbaren jeweils alle Merkmale des Oberbegriffs des Anspruchs 1.

Aufgabe der Erfindung ist die Beseitigung oben genannter Geräusche.

Diese Aufgabe wird durch eine Vorrichtung mit den Merkmalen des Anspruchs 1 gelöst.

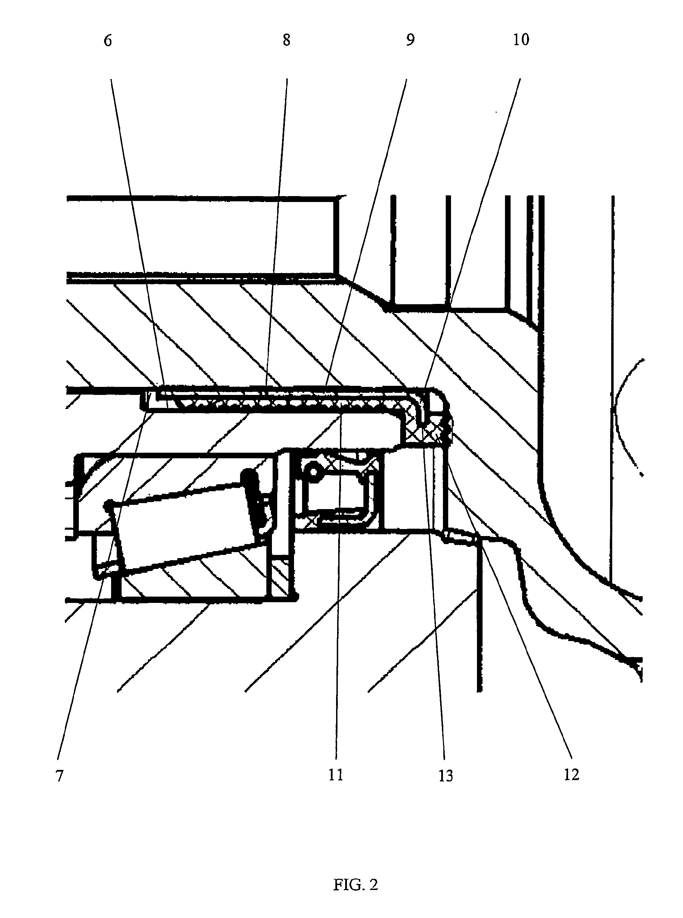

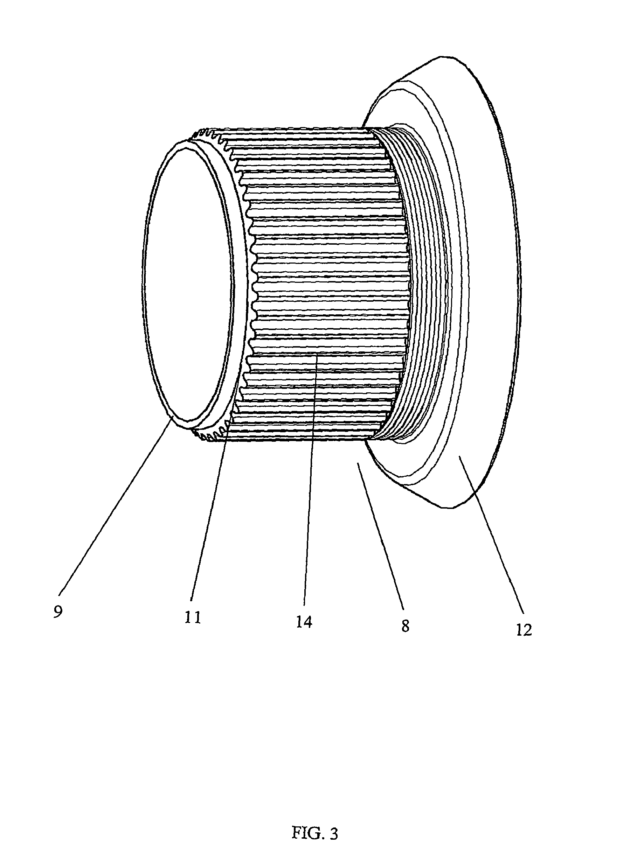

Die Erfindung wird näher mittels Zeichnunen beschrieben, wobei Fig. 1 einen Ausgleichsgetriebeschnitt, Fig. 2 ein Detail eines Ausgleichsgetriebeteils mit Gleitdämpfungselement und Fig. 3 eine axonometrische Ansicht eines Gleitdämpfungselements darstellen.

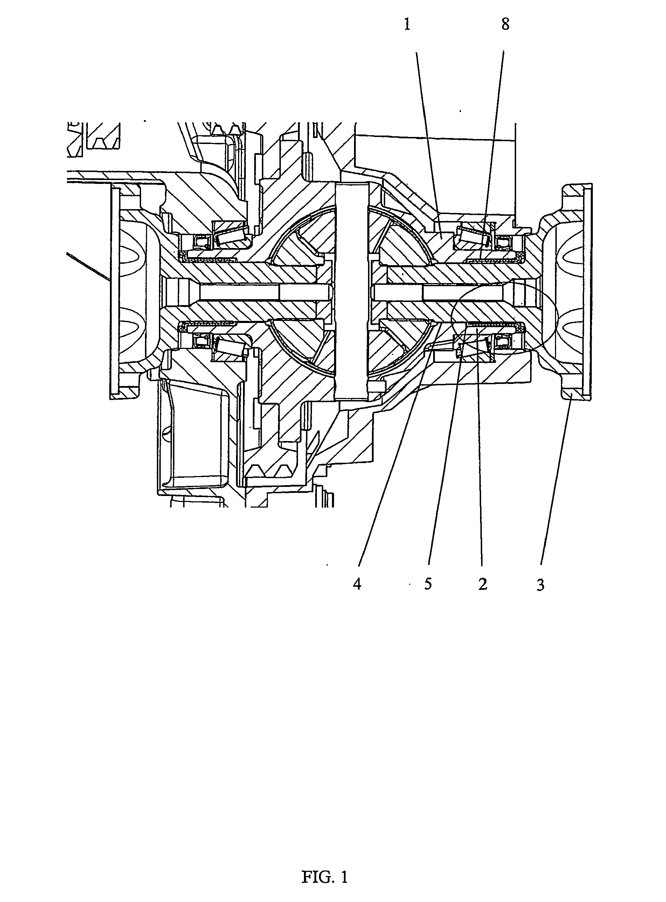

Eine Vorrichtung zur Dämpfung der Resonanzvibrationen besteht laut Fig. 1 aus einem Ausgleichsgetriebekörper 1 mit Rohrflanschen 2. Jeder Rohrflansch 2 ist mit einer Öffnung 4 zur Lagerung der Ausgangswelle 3 versehen und hat an seinem Ende einen Längsansatz 5. In diesen Längsansatz 5 wurde ein Gleitdämpfungselement 8 eingepresst. Das Gleitdämpfungselement 8 wird durch eine Zylinderbuchse 9 gebildet, die auf einer Seite mit einem Kragen 10 versehen ist. Die äußere Zylinderbuchsenoberfläche 9 ist mit einer federnden Zylinderschicht 11 versehen, die am Kragenende 10 mit einem Dichtungsring 12 versehen ist. Er ist an der Innenseite mit einer Nut 13 versehen, worin der Kragen 10 der Zylinderbuchse 9 einfällt. Die äußere Oberfläche der federnden Zylinderschicht 11 ist in Form von Längsnuten 14 gestaltet.

Nach Komplettierung von den einzelnen Teilen der Vorrichtung werden die Ausgangswellen 3 gleitfähig mit dem notwendigen Betriebsspiel in Zylinderbuchsen 9 untergebracht, die im Ausgleichsgetriebekörper 1 mittels federnder Zylinderschicht 11, z. B. Gummi, gelagert werden, wobei die Resonanzvibrationen der Ausgangswellen 3 im Ausgleichsgetriebekörper 1 vermieden werden, d. h., dass es zu keiner Entstehung der Geräuscherscheinungsformen kommt. Der Dichtungsring 12 der federnden Zylinderschicht sitzt seitlich auf dem Rohrflansch 2 auf und bildet dadurch eine Dichtung, die einen Austritt des Schmiermittels, das notwendig zur Flächenschmierung zwischen der Ausgangswelle 3 und der Zylinderbuchse 9 ist, vermeidet.

Die Vorrichtung lässt sich bei allen Fahrzeugen, bei denen der Motor mit dem Getriebe in einem Block festverbunden ist, und dort, wo ein Getriebebestandteil ein Ausgleichsgetriebe mit Ausgangswellen ist, einsetzen.

### Bezugszuchenliste

- 1: Ausgleichsgetriebekörper
- 2: Rohrflansch
- 3: Ausgangswelle
- 4: Öffnung
- 5: Längsansatz
- 6: Ansatzwand
- 7: Außenfläche der Ausgangswelle
- 8: Gleitdämpfungselement
- 9: Zylinderbuchse
- 10: Kragen
- 11: federnde Zylinderschicht
- 12: Dichtungsring
- 13: Nut
- 14: Längsnute

## Patentansprüche

1. Vorrichtung zur Dämpfung der Resonanzvibrationen der Ausgangswellen eines Ausgleichgetriebes gebildet durch Ausgleichgetriebekörper (1) mit Rohrflanschen (2) mit Öffnungen (4), die mit Längsansätzen (5) versehen sind, wobei in den Öffnungen (4) die Ausgangswellen (3) des Ausgleichgetriebes untergebracht werden, wobei zwischen einer Ansatzwand (6) des Ausgleichsgetriebekörpers (1) und einer Außenfläche (7) der Ausgangswelle (3) ein durch eine Zylinderbuchse (9) gebildetes Gleitdämpfungselement (8) angeordnet ist, wobei die Außenfläche der Zylinderbuchse (9) mit einer federnden Zylinderschicht (11) versehen ist
**dadurch gekennzeichnet,**
**dass** die Zylinderbuchse (9) auf einer Seite mit einem Kragen (10) versehen ist und
**dass** die federnde Zylinderschicht (11) an der Kragenseite (10) einen Dichtungsring (12) hat.

2. Vorrichtung nach Anspruch 2,
**dadurch gekennzeichnet,**
**dass** die Außenfläche der federnden Zylinderschicht (11) mit Längsnuten (14) versehen ist.

## Claims

1. Device for damping the resonant vibrations of the output shafts of a differential gear formed by a differential-gear body (1) with tubular flanges (2) having orifices (4) which are provided with longitudinal extensions (5), the output shafts (3) of the differential gear being accommodated in the orifices (4), there being arranged between an extension wall (6) of the differential-gear body (1) and an outer face (7) of the output shaft (3) a sliding damping element (8) which is formed by a cylinder liner (9), the outer face of the cylinder liner (9) being provided with a resilient cylinder layer (11), **characterized in that** the cylinder liner (9) is provided on one side with a collar (10), and **in that** the resilient cylinder layer (11) has a sealing ring (12) on the collar side (10).

2. Device according to Claim 1, **characterized in that** the outer face of the resilient cylinder layer (11) is provided with longitudinal grooves (14).

## Revendications

1. Dispositif pour amortir les vibrations de résonance des arbres de sortie d'un engrenage compensateur formé par des corps d'engrenage compensateur (1) munis de brides tubulaires (2) avec des ouvertures (4), qui sont pourvues de pièces longitudinales (5), les arbres de sortie (3) de l'engrenage compensateur étant montés dans les ouvertures (4), un élément d'amortissement de glissement (8) formé par une douille cylindrique (9) étant disposé entre une paroi de pièce (6) du corps d'engrenage compensateur (1) et une surface extérieure (7) de l'arbre de sortie (3), la surface extérieure de la douille cylindrique (9) étant pourvue d'une couche cylindrique élastique (11),
**caractérisé en ce que**
la douille cylindrique (9) est pourvue d'un côté d'un collet (10) et
**en ce que** la couche cylindrique élastique (11) présente, sur le côté du collet (10), une bague d'étanchéité (12).

2. Dispositif selon la revendication 1,
**caractérisé en ce que**
la surface extérieure de la couche cylindrique élastique (11) est pourvue de rainures longitudinales (14).
